# NEUE EUROPÄISCHE PATENTSCHRIFT

(11) **EP 0 558 916 B2**
(45) Veröffentlichungstag und Bekanntmachung des Hinweises auf die Entscheidung über den Einspruch: **19.03.2003**
(45) Hinweis auf die Patenterteilung: 05.04.2000
(21) Anmeldenummer: 93101186.0
(22) Anmeldetag: 27.01.1993
(51) Int. Cl.: C09D 11/16

(54) **Verwendung einer wässrigen Schreibflüssigkeit**
Use of an aqueous writing liquid
Utilisation d'un liquide d'écriture aqueux

(30) Priorität: 06.03.1992 DE 4207176
(43) Veröffentlichungstag der Anmeldung: 08.09.1993
(73) Patentinhaber: Pelikan PBS-Produktionsgesellschaft mbH & Co. KG, 30177 Hannover (DE)
(72) Erfinder: Mecke, Norbert, Dr., W-3000 Hannover 91 (DE); Schmedes, Albert, W-3017 Pattensen (DE); Weissmann, Karl-Heinz, W-3000 Hannover 1 (DE)
(74) Vertreter: Hagemann, Heinrich, Dr.rer.nat., Dipl.-Chem.

(56) Entgegenhaltungen:
- WO-A-89/08134
- DE-A- 2 835 006
- DE-A- 2 914 913
- JP-A- 3 237 171
- US-A- 5 120 359
- 3M Firmenbroschüre: "Fluorad" Tenside, "MvB/10.81/2.5", 1981

## Beschreibung

Die Erfindung betrifft die Verwendung einer wäßrigen Schreibflüssigkeit zur Erzeugung von trocken abwischbaren farbigen Markierungen auf nichtsaugenden Oberflächen in Form von Folien, Glas, Emaille, Kunststoffschreib- und Emailleschreibtafeln.

Schreibflüssigkeiten der obigen Art gehen aus dem Stand der Technik hervor. So beschreibt die DE-PS 1 814 378 eine Schreibflüssigkeit für nichtsaugende Oberflächen, die in wäßrigem Medium neben einem löslichen Farbstoff ein hygroskopisches Salz, wie Kaliumfluorid, als Trennmittel enthält. Wird eine derartige Schreibflüssigkeit auf eine nichtsaugende Oberfläche, wie z. B. Kunststoffschreibtafeln, Emailleschreibtafeln und dergleichen, aufgetragen und getrocknet, dann führt das trockene Abwischen der jeweiligen farbigen Markierungen bei hoher Luftfeuchtigkeit zu einem unerwünschten Schmieren. Bei niedriger Luftfeuchtigkeit läßt sich die trockene Markierung schlecht abwischen. Um die Nachteile dieser wäßrigen Schreibflüssigkeit zu beheben, sind vielfältige Verbesserungsvorschläge bekanntgeworden. Diese stellen auf ein System ab, in dem organische Lösungsmittel enthalten sind. Mit dem Einsatz von Lösungsmitteln sind Probleme verbunden. In neuerer Zeit sind organische Lösungsmittel im Hinblick auf Umwelt-Gesichtspunkte unerwünscht. Darüber hinaus sind sie brennbar und zum Teil giftig. Derartige Schreibflüssigkeiten auf Lösungsmittelbasis gehen beispielsweise aus den DE-PSen 25 12 734, 29 01 725 und 28 39 613, der DE-AS 23 65 171, der DE-OS 29 42 398 sowie der EP-A-209 367 hervor. Die DE-OSen 39 18 915 sowie 39 38 001 beschreiben Schreibflüssigkeiten, die Verbesserungen der vorstehend beschriebenen Schreibflüssigkeiten darstellen sollen. Sie beruhen auf wäßrigen Systemen, denen ein organisches Trennmittel einverleibt ist, wie beispielsweise flüssige Carbonsäureester oder flüssige höhere Paraffine. Sie sind unter Normalbedingungen nicht verdampfbar, so daß sie beim Einsatz der Schreibflüssigkeit und dem Verdampfen des wäßrigen Anteils zwischen der Oberfläche der Schreibtafel und der Schicht des Farbmittels eine Zwischenschicht liefern. Wird eine derartige Markierung trocken abgewischt, dann bleiben Reste des Trennmittels auf der Schreibtafel zurück. Dies führt beim erneuten Überschreiben dieser Stellen zu Benetzungsschwierigkeiten bzw. zum Verschmieren der neu aufgebrachten Markierungen.

Der Erfindung lag die Aufgabe zugrunde, die eingangs bezeichnete wäßrige Schreibflüssigkeit so weiterzubilden, daß sie die angesprochen Mängel der bekannten Schreibflüssigkeiten weitgehend ausschließt, insbesondere keine giftigen und brennbaren Bestandteile enthält, umweltneutral und geruchsfrei ist und ein optimales Abwischen ohne Schmieren sowie ein einwandfreies erneutes Beschreiben abgewischter Stellen der Schreibfläche ermöglicht und somit auf, nicht-saugenden Oberflächen verwendet werden können.

Erfindungsgemäß wird diese Aufgabe dadurch gelöst, daß die wäßrige Schreibflüssigkeit ein Farbmittel und ein feinteiliges Acryl-Polymensat oder ein Methylmethacryl-Homopolymensat mit einer Filmbildungstemperatur von mehr als 60 °C einer Teilchengröße von 0,02 bis 1 µm und 0,1 bis 0,5 Gew.-% Netzmittel enthält

Bei der Auswahl des Polymers unterliegt die Erfindung, bis auf die Anforderung der angesprochenen Mindestfilmbildungstemperatur, keinen wesentlichen Beschränkungen. So können die folgenden handelsüblichen wäßrigen Kunststoffdispersionen für die erfindungsgemäße wäßrige Schreibflüssigkeit herangezogen werden, wobei die Filmbildungstemperaturen, das Warenverzeichnis sowie der Hersteller bezeichnet sind: Acrylpolymerisat-Dispersionen, Primal AC-4500 (80 °C), und Primal WL-93 (77 °C), (jeweils vertrieben von der Firma Rohm and Haas), Jagotex EM 2245 (80 °C), (vertrieben von der Firma Ernst Jäger), eine Acrylpolymerisat-Dispersion (vertrieben von der Firma DSM Kunstharze), Ubatol KD-7003 (80 °C), eine weichmacherfreie Acryicopolymerisat-Dispersion (vertrieben von der Firma Cray valley Kunstharze), Synthacryl VSW 6899 (90 °C), eine Acrylsäureester-CopolymerisatDispersion (vertrieben von der Firma Hoechst), Dilexo MM 16 (größer als 100 °C), ein Methylmethacrylat-Homopolymerisat (vertrieben von der Firma CONDEA Chemie), NeoCryl A-550 (größer 100 °C), ein Methylmethacrylat-Homopolymerisat (vertrieben von der Firma ICI Resins B.V) und NeoCryl XK-52 (100 °C) eine Acrylatharz-Dispersion (vertrieben von der Firma ICI Resins B.V.).

Die Teilchengröße des in der erfindungsgemäßen Schreibflüssigkeit enthaltenen Polymers ist nicht kritisch. Die Teilchen sollten so klein sein, daß die Schreibflüssigkeit durch die zum Markieren herangezogenen herkömmlichen Schreibdochte hindurchtritt. Als groben Rahmen könnte man hier eine Teilchengröße von etwa 0,02 bis 1 Mikrometern angeben. Die Polymere müssen zur Lösung der gestellten Aufgabe eine Filmbildungstemperatur von mehr als 60 °C und insbesondere mehr als 80 °C aufweisen.

Es handelt sich im Rahmen der Erfindung um Thermoplaste, d.h. klassische Thermoplaste oder auch sogenannte thermoplastische Elastomere. Diese werden regelmäßig durch Emulsionspolymerisation hergestellt, so daß unmittelbar eine im Rahmen der Erfindung verwendbare wäßrige Dispersion anfällt.

Im Rahmen der Erfindung werden nur solche Farbmittel eingesetzt, bei denen es sich nach der gängigen Definition um Farbpigmente oder um solche Farbstoffe handelt, die in der waßrigen Schreibflüssigkeit nicht löslich sind. Bei deren Auftragen auf eine Schreibfläche, liegt dann neben dem feinteiligen Polymer die feinteiligen Farbmittel vor. Die Teilchengröße des Farbmittels ist ebenfalls nicht von kritischer Bedeutung. Die im Handel erhältlichen Farbpigmente bzw. Farbstoffe haben in der Regel eine Teilchengröße von etwa 0,05 bis 2 Mikrometern. Bezüglich der Wahl des Farbmittels unterliegt die Erfindung keinerlei Beschränkungen.

Um die mit der Erfindung angestrebten Effekte zu erzielen, ist es zweckmäßig, daß das Mengenverhältnis von feinteiligem Polymer zu Farbmittel mindestens etwa 1 : 1 ist. Das bevorzugte Mengenverhältnis von feinteiligem Polymer zu Farbmittel ist etwa 6 : 1 bis 1 : 1, wobei der Bereich von etwa 4 : 1 bis 2:1 ganz besonders bevorzugt ist.

Die erfindungsgemäße wäßrige Schreibflüssigkeit enthält ein Netzmittel, um die verschiedenen Schreibsubstrate, wie Folien, Glas, Emaille und dergleichen, aufgrund einer damit angehobenen Benetzbarkeit besser beschreibbar zu machen. Hierbei können beliebige Netzmittel eingesetzt werden. In dem Falle, daß ein handelsüblicher Farbfeinteig mit einer handelsüblichen Kunststoffdispersion vermischt wird, wobei die Art des in der Feinteigpräparation enthaltenen Netzmittels nicht bekannt ist, sollten jedoch, wenn es erforderlich ist, nicht-ionische Netzmittel herangezogen werden.

Diese können keinen negativen Einfluß auf evtl. vorhandene anionische oder kationische Netzmittel ausüben. Würde man hier ein kationisches Netzmittel heranziehen, dann könnte dieses die Wirkung eines evtl. vorhandenen anionischen Netzmittels aufheben. Ein Beispiel eines besonders geeigneten Netzmitteis ist das Handelserzeugnis "Fluorad FC-171" (ein Perfluorcarbonsäurederivat/vertrieben von der Firma 3 M). Die Netzmittel bewirken selbst in geringer Konzentration die gewünschten Effekte. Als grober Richtlinie könnte ein gewichtsprozentualer Rahmen von etwa 0,1 bis 0,5 Gew.-% angegeben werden. Wird der untere Grenzwert unterschritten, dann tritt die angestrebte Wirkung in der Regel nicht ein, während eine Menge oberhalb von etwa 0,5 Gew.-% keine Verbesserungen dieser Wirkung hervorruft.

Da die erfindungsgemäße wäßrige Schreibflüssigkeit bei längerer Lagerung der Gefahr der Beeinträchtigung durch Mikroorganismen unterliegen kann, empfiehlt es sich, dieser auch Konservierungs mittel in wirksamer Menge einzuverleiben. Geeignete Konservierungsmittel sind beispielsweise lsothiazolinon-Derivate. Vorzugsweise liegen die Konservierungsmittel in der erfindungsgemäßen Schreibflüssigkeit in einer Menge von etwa 0,05 bis etwa 0,3 Gew.-% vor.

Die mit der Erfindung verbundenen Vorteile lassen sich wie folgt umreißen: Sie ist frei von organischen Lösungsmitteln und somit nicht brennbar, ungiftig, neutral und geruchslos. Sie ist umweltneutral. Sie läßt sich problemlos trocken und, ohne zu schmieren und unabhängig von der Luftfeuchtigkeit, abwischen. Darüber hinaus ist die Stelle der trocken abgewischten Markierung unmittelbar und ohne Beeinträchtigung erneut zu beschreiben. Dennoch ist die aufgetragene Markierung wischfest genug, um durch ein zufälliges und nicht beabsichtigtes Berühren, beispielsweise mit der Hand oder anderen Gegenständen, wesentlich beeinträchtigt zu werden.

Die Erfindung soll nachfolgend anhand von Beispielen noch näher erläutert werden.

### Beispiel 1

Eine rote Schreibflüssigkeit wird anhand der folgenden Rezeptur hergestellt:

| | |
|---|---|
| Handelsübliche Pigmentpräparation mit einem roten Farbpigment (etwa 60%ig/Handelsbezeichnung: Sunsperse Red RHD-6028, Vertrieb durch die SUN Chemical Corp.) | 6,0 Gewichtsteile |
| | |
| Acrylpolymerisat-Dispersion (etwa 40%ig/MFT: 80 °C/Primal AC-4500) | 50,0 Gewichtsteile |
| | |
| Netzmittel (Perfluorcarbonsäure-Derivat/Fluorad FC 171) | 0,1 Gewichtsteile |
| | |
| Konservierungsmittel (Isothiazolinon-Derivat/TPI 1330/Hersteller Schülke und Mayr) | 0,1 Gewichtsteile |
| | |
| Wasser | 43,8 Gewichtsteile |

### Beispiel 2

Eine erfindungsgemäße grüne wäßrige Schreibflüssigkeit wurde anhand der unter Beispiel 1 beschriebenen Rezeptur hergestellt, wobei allerdings anstelle der roten Farbpigmentpräparation die grüne Farbpigmentpräparation der Handelsbezeichnung Sunsperse Green GHD-6004 (ebenfalls von der Sunsperse Chemical Corp.) eingesetzt wurde.

### Beispiel 3

Die Rezeptur nach Beispiel 1 wurde dahingehend abgeändert, daß anstelle des Polymers Primal AC-4500 die Kunststoffdispersion Ubatol KD-7003 (etwa 40 Gew.-% an Polymer) herangezogen wurde.

## Patentansprüche

1. Verwendung einer wäßrigen Schreibflüssigkeit zur Erzeugung von trocken abwischbaren farbigen Markierungen auf nicht-saugenden Oberflächen in Form von Folien, Glas, Emaille, Kunststoffschreib- und Emailleschreibtafeln, die ein wasserunlösliches Farbmittel sowie ein Polymer enthält, **dadurch gekennzeichnet, daß** das Polymer ein Acryl-Polymerisat oder ein Methylmethacryl-Homopolymerisat einer Filmbildungstemperatur von über 60°C sowie einer Teilchengröße von 0,02 bis 1 µm ist und die Schreibflüssigkeit 0,1 bis 0,5 Gew.-% Netzmittel enthält.

2. Verwendung nach Anspruch 1, **dadurch gekennzeichnet, daß** das Mengenverhältnis des Polymers zu dem Farbmittel 6:1 bis 1:1 beträgt.

3. Verwendung nach Anspruch 1 oder 2, **dadurch gekennzeichnet, daß** die Schreibflüssigkeit ein Konservierungsmittel in Form eines Isothiazolinon-Derivats enthält.

## Claims

1. Use of an aqueous writing fluid for the generation of dry-wipable coloured markings on non-absorbent surfaces in the form of sheets, glass, enamel, plastic writing tablets or enamel writing tablets containing a water-insoluble colouring agent and a polymer, **characterized in that** the polymer is an acrylic polymer or a methylmethacrylic homopolymer with a film-formation temperature of above 60 °C and has a particle size of 0.02 to 1 µm and that the writing fluid contains 0.1 to 0.5% by weight of wetting agent.

2. Use according to claim 1, **characterised in that** the ratio of quantity of polymer to colouring agent is in the range 6:1 to 1:1.

3. Use according to claim 1 or claim 2, **characterised in that** the writing fluid contains a preservative in the form of an isothiazolinone derivative.

## Revendications

1. Utilisation, pour produire des marquages de couleurs pouvant être essuyés à sec sur des surfaces non absorbantes, sous forme de feuilles, de verre, d'émail, de tableaux en matière synthétique et en émail, d'un liquide aqueux d'écriture qui contient un colorant insoluble dans l'eau ainsi qu'un polymère, **caractérisée en ce que** le polymère est un polymérisat acrylique ou un homopolymérisat méthylméthacrylique dont la température de formation d'un film est supérieure à 60°C et dont le diamètre des particules va de 0,02 à 1 µm et le liquide d'écriture contient 0,1 à 0,5 % en poids d'agent mouillant.

2. Utilisation suivant la revendication 1, **caractérisée en ce que** le rapport quantitatif du polymère au colorant a une valeur de 6:1 à 1:1.

3. Utilisation suivant la revendication 1 ou 2, **caractérisée en ce que** le liquide d'écriture contient un agent conservateur sous forme d'un dérivé d'isothiazolinone.
